# FASCICULE DE BREVET EUROPEEN

(11) **EP 1 967 099 B1**
(45) Date de publication et mention de la délivrance du brevet: **06.01.2010**
(21) Numéro de dépôt: 07103610.7
(22) Date de dépôt: 06.03.2007
(51) Int. Cl.: A47J 31/06, A47J 31/40

(54) **Dispositif pour la préparation d'un liquide alimentaire à partir d'une capsule**
Vorrichtung zur Herstellung eines flüssigen Lebensmittels aus einer Kapsel
Device for preparing a food liquid from a capsule

(43) Date de publication de la demande: 10.09.2008
(73) Titulaire: Nestec S.A., 1800 Vevey (CH)
(72) Inventeur: Denisart Jean-Luc, 1096 Cully (CH); Meier Alain, 6837 Caneggio (CH); Bonacci Enzo, 1073 Savigny (CH); Pleisch Hans Peter, 1802 Corseaux (CH); Talon Christian, 1134 Vufflens-le-Château (CH)
(74) Mandataire: Borne, Patrice Daniel

(56) Documents cités:
- EP-A- 1 669 011
- EP-A2- 1 486 150
- FR-A- 2 842 089
- US-A- 3 260 190
- US-A- 3 470 812
- US-A1- 2002 144 604

## Description

La présente invention concerne un dispositif pour la préparation d'un liquide alimentaire à partir d'une capsule. En particulier, l'invention concerne la préparation de boissons chaudes ou froides à partir de capsules contenant un ou plusieurs ingrédients alimentaires.

Il existe de nombreux systèmes pour préparer des boissons à partir de capsules. La façon d'insérer la capsule dans la machine doit être de préférence assez directe, sans complications et permettre facilement le retrait de la capsule après usage.

Le problème de certains systèmes comprenant des moyens de support de capsule intégrés à la machine vient de ce qu'il est difficile d'éviter tout contact entre la boisson et la machine. Ces systèmes s'adaptent mal à un usage multi-boissons du fait du contact fréquent de la boisson avec les moyens de support de la capsule. Cela pose ainsi des problèmes de contaminations croisées et des problèmes d'hygiène, en particulier, avec certains ingrédients comme le lait.

Il existe donc des systèmes comprenant un porte-capsule amovible; c'est à dire détachable du reste du dispositif afin de résoudre ces problèmes. Un autre avantage est de pouvoir se débarrasser plus facilement de la capsule, notamment, lorsque celle-ci reste pleine de liquide après extraction. On évite le stockage de capsules contenant encore du liquide dans la machine. Cela facilite aussi le remplacement de la capsule et permet donc un rinçage ou nettoyage plus facile du porte-capsule, par exemple, au lave-vaisselle.

Dans la demande de brevet WO 2006/082064, il est décrit un dispositif avec un porte-capsule amovible comprenant un injecteur. L'injecteur peut-être positionné à différents endroits relativement à la surface de la capsule; ce qui permet d'optimiser la circulation du fluide à l'intérieur de la capsule et donc de favoriser par exemple la dissolution ou dispersion de certains ingrédients. Un tel système reste cependant relativement complexe et nécessite un bon ajustement entre l'unité de fluide de la machine et l'injecteur du porte-capsule lors de la connexion. La précision de l'ajustement est délicate et peut être affectée pendant l'usage du système. Le système peut aussi poser un problème de délamination de la capsule dans des conditions de mise sous pression au niveau du scellage de la membrane formant la surface d'injection contre les bords du corps de la capsule. Un tel phénomène peut être lié au manque de maintien au serrage du scellage par le support de l'injecteur se raccordant sur le côté du porte-capsule où les forces de serrage reprises par le support sur les bords de la capsule sont plus faibles.

Les autres dispositifs existants ne permettent pas de solutionner tous les problèmes évoqués en relation avec l'invention de la demande WO 2006/082064.

La demande de brevet EP 1 153 561 A1 concerne un dispositif avec un tiroir mobile et une unité d'injection qui s'abaisse selon une cinématique combinée de rotation et translation. Le dispositif comprend un seul élément de perçage central et le choix du positionnement de l'élément de perçage n'est pas libre. Le support de capsule est mobile en translation mais n'est pas détachable par rapport au dispositif et donc nécessite une manipulation ou un système d'éjection pour permettre le retrait de la capsule.

La demande de brevet US 2003/066431 concerne une machine à café avec un tiroir mobile. Le tiroir mobile n'est pas non plus détachable. L'unité d'injection peut être un support pivotant comprenant une pointe d'injection qui se rabat sur le dessus de la capsule. Toutefois, le dispositif ne prévoit pas un serrage étanche entre la capsule et l'unité d'injection permettant l'application de pressions d'extraction élevées dans la capsule. Une telle machine est donc essentiellement adaptée à un usage de percolation à basse pression.

Le brevet US 3,260,190 se rapporte à une machine à café utilisant des cartouches comprenant un tiroir détachable lequel s'insère en glissement dans des rails. Un système de leviers permet de rapprocher et engager des moyens de perçage de la cartouche. Ces moyens de perçage bloquent la cartouche dans la position de fonctionnement.

La demande de brevet WO 97/43937 concerne un adaptateur amovible pour recevoir une dose de café portionné qui s'insère sous un distributeur d'eau chaude au moyen d'un système rotatif à baïonnette et dans une configuration étanche.

La demande de brevet US 2003/0071056 se rapporte à une machine pour délivrer des boissons comprenant un tiroir dans lequel s'agence une cartouche laquelle est percée par un injecteur mobile en réalisant l'étanchéité directement autour de la cartouche.

La demande de brevet EP 1477092 se rapporte à un appareil pour distribuer des boissons qui comprend un tiroir destiné à recevoir une dosette pour préparation d'une boisson lequel s'insère en coulissement dans une position de fonctionnement et qui est sécurisé dans cette position de fonctionnement par des moyens de blocage activés par la pression exercée par le tiroir au moment de l'insertion et situés en bout du tiroir.

La demande de brevet EP 1 486 150 A2 se rapporte à un appareil pour distribuer des boissons sous faible pression comprenant un tiroir mobile dans une unité d'injection pour recevoir une cartouche et associé à un dispositif d'éjection de la cartouche. L'unité d'injection comprend un injecteur mobile linéairement et qui s'abaisse pour percer la cartouche. Le tiroir est immobilisé par des moyens de retenue agissant en blocage transversal pour simplement éviter son retrait. En cas de pressions internes élevées, il y a un risque de délaminage sur les bords de scellage de la capsule en raison de l'absence de serrage.

La demande de brevet WO 2006/066624 concerne un appareil pour préparer des boissons à partir d'un emballage comprenant un support d'emballage comprenant une ouverture pour recevoir l'emballage et un élément de couvercle pour fermer l'ouverture; des moyens de fermeture étant prévus et adapté pour déplacer le support d'emballage selon une direction en translation à partir d'une position ouverte vers une position fermée de l'ouverture du support; le support étant déplacé plus particulièrement vers le haut par des moyens d'engrenage et des manivelles.

La plupart des dispositifs de l'état de la technique ne sont pas adaptés à subir des pressions élevées. Certains dispositifs qui pourraient être adaptés à la haute pression se heurtent toutefois à des problèmes d'étanchéité, de manque de serrage et de complexité mécanique liés à la nécessiter de réaliser une jonction à la fois étanche entre le système d'injection et suffisamment serrée pour éviter un retrait accidentel du porte-capsule ou encore éviter une délaminage accidentelle de la capsule. Le problème de délaminage à haute pression peut conduire à des projections de vapeur ou d'eau bouillante ou encore une explosion de la capsule.

D'autre part, dans la plupart des systèmes de l'art antérieur, le maintien en serrage du support de capsule dans le dispositif est habituellement obtenu par une compression des moyens d'étanchéité. Pour éviter tout risque d'enlèvement accidentel du support de capsule, notamment s'il est détachable, en mode sous pression, il est essentiel d'appliquer un serrage suffisant de celui-ci dans le dispositif Un serrage important sur le moyen d'étanchéité lui-même peut provoquer un enfoncement de la capsule si le serrage s'applique sur la capsule elle-même ou encore une détérioration assez rapide du moyen d'étanchéité et donc des conditions d'étanchéité. Un autre problème est que le fluide d'injection peut venir recouvrir en partie la surface externe de la capsule si l'étanchéité est faite sur les bords de la capsule; ce qui n'est pas très hygiénique.

Le but de la présente invention est d'apporter une solution à ces problèmes.

L'invention apporte une résolution des problèmes ainsi que des avantages liés à: - un agencement des moyens d'injection avec la capsule plus direct et procurant une plus grande simplicité et fiabilité mécanique,- une liberté quant à la position du point d'injection pour un usage "multi-boissons" afin de pouvoir favoriser, par exemple, une meilleure dissolution de certains ingrédients dans la capsule, - un agencement réalisant une meilleure étanchéité en mode sous pression de la capsule afin de favoriser les procédés d'extraction, de percolation, de dissolution et/ou la création de mousse,- un agencement réduisant les risques d'éclatement ou de délaminage de la capsule et donc apportant ainsi une plus grande sécurité pour l'utilisateur, et - une meilleure hygiène avec un contact réduit entre liquide et les surfaces externe de la capsule ou les surfaces du porte-capsule.

Pour cela, l'invention est basée selon un premier principe général consistant à prévoir un porte-capsule, de conception plus simple, c'est à dire: sans moyen d'injection propre, qui s'insère dans le dispositif dans une position d'insertion, puis des moyens d'injection du fluide dans la capsule qui sont supportés entièrement par l'unité d'alimentation de fluide du dispositif et qui sont mobiles en engagement avec la capsule; les moyens d'étanchéité étant prévus alors en association avec les moyens d'injection afin de réaliser une étanchéité directe entre les moyens d'injection et la capsule, et un serrage dissocié des moyens d'étanchéité par des moyens réalisant un serrage suffisamment efficace contre la capsule et le porte-capsule par rapport à l'unité d'injection pour supporter la pression dans la capsule et éviter notamment les risques liés au délaminage de la capsule.

Plus particulièrement, l'invention concerne un dispositif pour la préparation d'un liquide alimentaire à partir d'une capsule selon la revendication indépendente 1.

De préférence, la surface de serrage est disposée de telle manière qu'elle s'ajuste au moins dans la limite de la bordure de scellage de la paroi d'injection de la capsule de sorte qu'un délaminage possible dudit scellage de la capsule sous pression est empêché ou tout au moins le risque d'un tel délaminage réduit.

La pression exercée par le moyen élastique d'étanchéité contre la capsule est de préférence une pression d'étanchéité essentiellement axiale obtenue par compression du moyen élastique d'étanchéité sur la surface d'injection de la capsule. La pression réalisée par le moyen d'étanchéité s'exerce au moins sur la partie de la surface d'injection située immédiatement autour du point d'injection.

Selon un principe de l'invention, la fonction de serrage exercées sur la bordure de la capsule et contre le porte-capsule et la fonction d'étanchéité contre la capsule sont dissociées. De cette manière, il devient aussi possible de réaliser l'étanchéité sur une partie flexible de la capsule comme sur sa membrane supérieure sans pour autant la déchirer, tout au moins, au delà de l'ouverture nécessaire pour pratiquer l'injection du fluide dans la capsule et de réaliser un serrage efficace contre une partie plus rigide de la capsule notamment contre sa bordure de scellage. L'étanchéité peut ainsi être obtenue sans effort excessif et en partie au moins par les forces qui s'exercent dans la capsule en raison de la pression du fluide dans la capsule. En particulier, lorsque la capsule possède une paroi d'injection flexible, telle qu'une membrane souple, celle-ci est repoussée en direction des moyens d'étanchéité entourant les moyens d'injection.

On comprend donc que les forces de serrage peuvent être adaptées pour réaliser un serrage efficace évitant les problèmes de délaminage toutefois sans excès du fait que l'étanchéité peut être en partie réalisée par la pression du fluide dans la capsule.

Selon un mode possible, le moyen élastique d'étanchéité s'étend sur une surface du support d'injection destinée à recouvrir entièrement la surface d'injection de la capsule. De ce fait, non seulement l'étanchéité est réalisée localement autour du point d'injection mais sur toute la paroi d'injection de la capsule. L'avantage est l'assurance d'une étanchéité même pour des capsules défectueuses, par exemples en raison d'une perforation réalisée accidentellement dans la paroi d'injection de la capsule; ce qui peut arriver lorsque la paroi est une membrane perforable.

Selon un mode possible, le moyen élastique d'étanchéité s'étend aussi dans la portion de serrage du support d'injection contre la bordure de la capsule et/ou du porte-capsule. De ce fait, un rattrapage des jeux mécaniques des pièces de serrage du dispositif ainsi que des variations dues aux tolérances dimensionnelles de la bordure de la capsule sont aussi rendus possibles lors du serrage par l'élasticité procurée par ledit moyen élastique.

Selon un mode possible, le support d'injection comprend aussi une portion d'engagement en relief prévue pour repousser une paroi flexible de la capsule vers l'intérieur de la capsule. Comme il sera expliqué plus loin, un tel agencement sert à réduire le risque de résurgence ou jet brutale de liquide sous pression au travers de la capsule lors du désengagement des moyens d'injection avec la capsule.

Selon un mode possible de l'invention, les moyens d'injection sont préférentiellement mobiles selon une trajectoire rectiligne. Une telle configuration permet une bonne association des moyens d'injection avec la capsule et d'avoir une étanchéité en contrôlant mieux, par exemple, les dimensions du/des point(s) d'injection pratiqué(s) dans la capsule.

Dans ce cas, les moyens d'injection sont déplacés selon une direction rectiligne et sensiblement perpendiculaire à la surface d'injection de la capsule.

Selon un aspect de l'invention, afin d'améliorer la dissolution et/ou le mouillage des ingrédients contenus dans la capsule, les moyens d'injection sont localisés dans une région excentrée par rapport à l'axe central de l'ouverture du porte-capsule pour recevoir la capsule. De cette façon, le fluide peut créer une circulation plus énergique dans la capsule avec plus de turbulences par rapport à une implantation centrale ou encore une implantation comprenant plusieurs points d'injection répartis uniformément sur la surface d'injection de la capsule.

Les moyens d'injection peuvent être formés d'au moins une pointe d'injection solidaire du support d'injection. Selon un mode préféré, une seule pointe d'injection est utilisée pour injecter le fluide sous pression au travers de la paroi de la capsule. Ceci a pour avantage de ne nécessiter qu'une faible force de perçage à l'inverse des moyens d'injection multi-pointes et c'est donc un avantage notamment pour le perçage de parois de capsule contenant des polymères résistant à la perforation. La surface d'injection peut aussi être percée proprement par la pointe et le fluide est injecté directement dans la capsule au travers de la pointe ou contre les surfaces de la pointe. Un tel agencement permet aussi de limiter la zone à rendre étanche du fait du caractère ponctuel de l'injection. De préférence, la pointe d'injection fait saillie par rapport à la surface d'engagement du support d'injection pour pénétrer dans la capsule par engagement de la surface du support d'injection avec la capsule.

De préférence, la pointe d'injection est traversée par un conduit pour l'amenée du liquide. L'orifice du conduit peut être disposé dans l'axe du conduit ou légèrement incliné de manière à diriger le jet en direction du fond et de manière excentrée dans la capsule. Un tel dispositif facilite la réalisation de l'étanchéité autour du moyen d'injection, plus précisément, autour du conduit. Toutefois, il est possible d'envisager un conduit d'amenée du liquide et une pointe qui sont placés de manière séparée et un moyen assurant l'étanchéité qui entoure à la fois la pointe et l'entrée de fluide dans la capsule.

Le moyen élastique d'étanchéité peut être rendu élastique par sa forme et/ou le matériau constituant ledit moyen.

Le moyen élastique local d'étanchéité est préférablement un moyen en matériau élastomère.

Le moyen local d'étanchéité est préférablement une bague en matériau caoutchouc élastique ou silicone entourant la base de ladite pointe d'injection.

Le moyen local d'étanchéité peut être une couche externe recouvrant entièrement ou partiellement le support d'injection.

Dans une alternative possible, le moyen élastique d'étanchéité peut faire partie intégrante de la surface d'injection de la capsule.

De préférence, la surface de la capsule sur laquelle le moyen d'étanchéité s'agence est aussi flexible. Il peut avantageusement s'agir d'une membrane perforable. La flexibilité peut permettre de compenser les jeux et irrégularités de surface et ainsi augmenter l'efficacité de l'étanchéité.

D'une manière générale, les moyens complémentaires d'insertion du porte-capsule et de l'unité d'alimentation de fluide comprennent des nervures et des rainures de guidage permettant l'insertion du porte-capsule en glissement dans l'unité d'alimentation de fluide.

Les moyens d'injection et le support mobile peuvent être solidaires de manière fixe entre eux et donc être déplaçés ensemble.

Selon un premier mode possible, le support mobile est déplacé selon une trajectoire rectiligne et sans rotation axiale. Les moyens d'actionnement du support mobile peuvent être agencés de manière à guider le support mobile sensiblement linéairement et sans mouvement de rotation. Les avantages sont d'assurer un engagement des moyens d'injection contre la capsule précis et de pouvoir ainsi réaliser une étanchéité locale résistante à la pression régnant dans la capsule. Une telle configuration donne aussi le choix dans le positionnement relatif des moyens d'injection par rapport à la surface d'injection de capsule notamment d'une façon excentrée.

Selon un autre mode de réalisation, le support est mobile selon une trajectoire curviligne comprenant à la fois une composante axiale et une composante en rotation. En particulier, le support mobile est articulé selon un axe sensiblement parallèle au plan transversal dudit support mobile et est situé sur un côté dudit support. L'axe est aussi déplaçable en translation selon une direction longitudinale. L'amplitude de déplacement longitudinal peut être courte, de l'ordre de 5 à 20 mm. Par exemple, un bord du support mobile peut être articulé par des moyens d'articulation sur une embase fixe de l'unité d'alimentation selon un axe de rotation mobile en translation dans au moins une lumière ménagée dans l'embase. Un avantage d'une telle configuration est qu'elle permet un ajustement entre le support d'injection et le porte-capsule plus tolérant et permet aussi de réduire le nombre de pièces.

Selon un mode de réalisation, le support d'injection est mobile par rapport à une embase fixe de l'unité d'alimentation. Dans ce cas, les moyens d'injection sont montés par exemple au support de manière fixe; lequel support est mobile relativement à la capsule et au porte-capsule une fois en position d'insertion.

Le support mobile est généralement associé à des moyens de serrage du support mobile d'injection prévus pour déplacer les moyens d'injection relativement au porte-capsule lequel est fixé en position d'insertion dans l'embase, à partir d'une position à distance des moyens d'injection, permettant l'insertion préalable du porte-capsule dans l'unité d'alimentation à une position d'injection par rapprochement des moyens d'injection contre la capsule et/ou le porte-capsule et permettre ainsi l'engagement des moyens d'injection avec la capsule.

Selon une caractéristique, les moyens complémentaires d'insertion permettent l'insertion du porte-capsule dans l'unité d'alimentation selon une direction linéaire et distincte de la direction de déplacement du support mobile ou des moyens d'injection.

Cette direction d'insertion du porte-capsule peut être avantageusement légèrement inclinée par rapport au plan horizontal et de telle sorte à incliner la paroi d'injection de la capsule et à placer le point d'injection sur la partie de la paroi d'injection de la capsule sensiblement plus haut relativement au centre de la capsule. Un avantage est de réduire le risque de résurgence de liquide sous pression au moment du désengagement en maintenant le point d'injection au dessus du niveau de liquide restant dans la capsule. Ainsi les moyens d'insertion du porte-capsule peuvent être configurés pour une insertion du porte-capsule dans l'unité d'alimentation selon un angle d'inclinaison compris entre 2 et 25 degrés environ, de préférence entre 5 et 10 degrés. Toutefois, l'angle ne doit pas être trop grand pour aussi éviter un écoulement du liquide hors de la capsule par gravité lors du désengagement du moyen d'injection par rapport à la capsule.

Dans un mode préférentiel, les moyens d'actionnement comprennent une genouillère ou une came actionnée par un levier manuel ou un moteur.

Selon un autre mode de réalisation de l'invention, les moyens d'injection sont actionnés directement par un levier mobile déplaçable en rotation sur une embase de l'unité d'alimentation. Les moyens d'injection font partie d'un élément de support lequel est guidé en déplacement par l'embase. De la sorte, le déplacement du levier en rotation entraîne les moyens d'injection. Le levier mobile est verrouillable contre l'embase en position d'injection des moyens d'injection avec la capsule.

Selon un mode de réalisation, l'embase et le porte-capsule comprennent des moyens complémentaires d'insertion agencés pour bloquer et assurer un serrage du porte-capsule en position d'insertion par effet de l'injection du fluide sous pression dans la capsule. Plus précisément, l'embase et le porte-capsule comprennent des moyens complémentaires en forme de coin lesquels sont agencés pour maintenir solidement le porte-capsule en position d'insertion sous l'effet conjugué des forces de frottement exercées par les moyens complémentaires et de la pression interne exercée dans la capsule du fait de l'injection du fluide dans la capsule. Autrement-dit, les moyens complémentaires d'insertion forment les moyens de serrage et sont "autobloquants" sous l'effet de la pression d'injection. Une telle configuration permet de simplifier le dispositif mécanique et offre plus de sécurité en évitant toute possibilité de désengagement du porte-capsule tant qu'une certaine pression s'exerce dans le système.

Selon une caractéristique, l'unité d'alimentation est ouverte vers le bas pour recevoir le porte-capsule qui s'étend par une portion de paroi(s) libre pour supporter la capsule en direction de la zone de service et pour permettre l'écoulement du liquide à partir de la capsule sans toucher le dispositif en dehors du porte-capsule. Ainsi, selon l'agencement du porte-capsule dans le dispositif, un écoulement direct à partir de la capsule est possible sans toucher une surface non-détachable du dispositif Selon une configuration du porte-capsule, le porte-capsule comprend une coque pour recevoir la capsule se terminant par au moins une ouverture placée au fond de ladite coque. L'ouverture est prévue suffisamment large pour éviter le contact avec le liquide délivré et d'éventuelles projections liées aux turbulences lors de la délivrance du liquide au travers de la capsule.

**Brève description des figures**

D'autres caractéristiques et avantages de la présente invention apparaîtront à la lecture de la description qui va suivre, donnée à titre d'exemple non limitatif et en référence aux dessins annexés dans lesquels:

La figure 1 est une vue simplifiée générale d'un système de préparation de liquide selon l'invention;

La figure 2 montre une vue en perspective du dispositif selon un premier mode de réalisation, en particulier de l'unité d'alimentation en position ouverte et du porte-capsule en position détachée;

La figure 3 montre une vue en perspective comme à la figure 2, avec le porte-capsule en position d'insertion et l'unité d'alimentation en position ouverte;

La figure 4 montre une vue en perspective comme figures 2 et 3, en position fermée de l'unité d'alimentation, c'est à dire en position d'injection;

La figure 5 montre une vue en coupe transversale selon le plan P de la figure 4;

La figure 6 montre une autre vue en perspective d'un détail du dispositif;

La figure 7 montre une première partie d'une structure de réglage de la force de serrage du dispositif contre la capsule;

La figure 8 montre une seconde partie complémentaire de la structure de réglage de la force de serrage du dispositif;

La figure 9 montre une vue en perspective du dispositif selon un second mode de réalisation, en particulier de l'unité d'alimentation en position ouverte et du porte-capsule en position détachée;

La figure 10 montre une vue en coupe transversale selon l'axe médian longitudinal du porte-capsule de la figure 9;

La figure 11 montre une vue en perspective comme à la figure 9, avec le porte-capsule en position d'insertion;

La figure 12 montre une vue en coupe transversale de la figure 11;

La figure 13 montre une vue en perspective du dispositif selon un troisième mode de réalisation, en particulier avec l'unité d'alimentation en position ouverte et le porte-capsule en position détachée;

La figure 14 montre une vue de dessous et en perspective du dispositif selon le troisième mode de réalisation;

La figure 15 montre une vue en coupe transversale selon l'axe médian longitudinal du porte-capsule de la figure 13 en position d'insertion du porte-capsule avant fermeture de l'unité d'injection;

La figure 16 montre une vue en coupe transversale selon le troisième mode de réalisation en position de fermeture de l'unité d'alimentation;

La figure 17 montre une vue en perspective du dispositif selon un quatrième mode de réalisation, en particulier avec l'unité d'alimentation en position ouverte et le porte-capsule en position détachée;

La figure 18 montre une vue en perspective du dispositif de la figure 16 en mode d'insertion du porte-capsule avant fermeture de l'unité d'alimentation;

La figure 19 montre une vue en coupe selon l'axe médian longitudinal de la figure 18 en position de fermeture de l'unité d'alimentation.

**Description détaillée de l'invention**

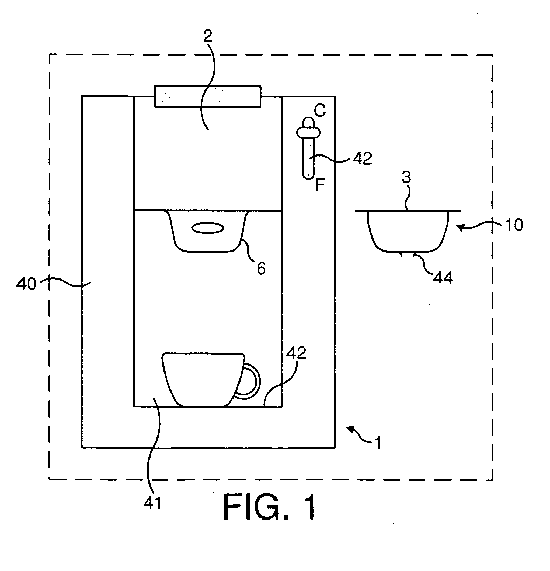

La figure 1 montre sous forme simplifiée un système pour la distribution de liquides préparés à partir de capsules comprenant un dispositif ou appareil 1 et des capsules 10 adaptées audit dispositif Le liquide peut être une boisson chaude ou froide telle que du café, cappuccino ou du thé ou une autre préparation alimentaire telle que des sauces, soupes ou autres.

Chaque capsule contient un ou plusieurs ingrédients alimentaires sous forme solide, liquide, gélifiée ou pâteuse. Il peut s'agir, par exemple, de poudre de café rôti-moulu, de café soluble, de poudre ou de concentré liquide de lait, de cacao ou de thé en feuille ou sous forme soluble.

La capsule est avantageusement du type de celle décrite dans le brevet EP1472156B1. En particulier, la capsule peut comprendre une paroi d'injection 3 sous forme d'une membrane flexible au travers de laquelle est injecté le fluide (c'est à dire, une quantité d'eau chaude ou froide) à partir de l'unité d'alimentation et un conduit 44 destiné à guidé le liquide préparé directement dans la tasse. La membrane peut être rattachée sur un bord de scellage du corps de la capsule. La capsule peut comprendre une chambre interne étanche à l'air contenant les ingrédients. La chambre peut être perforée sous l'effet de la montée en pression du fluide injecté dans la chambre pour laisser passer le liquide préparé. La perforation peut se faire par des moyens de perforation propres à la capsule en association avec au moins une membrane interne de la chambre. La perforation peut s'effectuer par déformation de la membrane interne contre les moyens de perforation jusqu'à atteindre la tension de rupture du matériau de la membrane. Un avantage de la capsule est de pouvoir réaliser une extraction, dissolution ou percolation sous une pression contrôlée, de l'ordre de 5 à 20 bar, à l'intérieur de la capsule en retardant l'écoulement des ingrédients et en améliorant l'interaction des ingrédients avec le fluide sous pression. Ce principe permet de créer plus de mousse qu'avec des procédés de percolation à basse pression. Un autre avantage est de pouvoir, en même temps, limiter le contact entre le liquide et le dispositif tel qu'il est décrit dans le brevet EP1472156B1. Bien entendu, l'invention n'est pas limitée à l'utilisation de la capsule selon ce brevet. Par exemple, la membrane et les moyens d'ouverture peuvent être remplacés par un élément filtrant par exemple tel qu'un filtre en papier et/ou plastique et un support de filtre comprenant des canaux de collecte et/ou des ouvertures de distribution du liquide.

Dans la présente description, le terme "fluide d'injection" se rapporte essentiellement à de l'eau chaude ou froide ou encore à un mélange d'eau et d'air.

Le dispositif peut comprendre un bâti 40 dans lequel est montée une unité d'alimentation en fluide sous pression 2 et comprend un porte-capsule 6 détachable du dispositif. Sous le porte-capsule est agencée une zone de service 41 qui comprend, par exemple, un support de tasse 42. Le dispositif comprend, par ailleurs, une réserve d'eau telle qu'un réservoir amovible, associée à une pompe, un chauffe-eau et un circuit de fluide permettant d'alimenter l'unité d'alimentation de fluide 2 en eau chaude et/ou froide selon les besoins. Le dispositif comprend par ailleurs un moyen de commande, plus ou moins sophistiqué, permettant à l'utilisateur de sélectionner selon un choix sélectif préétabli plusieurs options de préparations chaudes et/ou froides et/ou plusieurs volumes de boissons à distribuer. Le moyen de commande peut être associé à un contrôleur lequel commande sélectivement la mise en marche de la pompe, du chauffe-eau et de vanne(s) associée(s) au circuit de fluide. Le moyen de commande peut être un moyen du type levier ou un ou plusieurs boutons de commande.

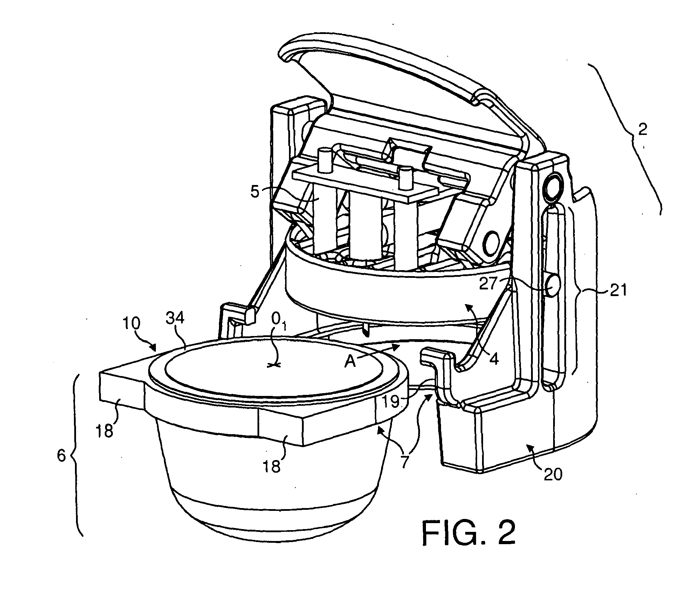

Les figures 2 à 6 montrent un premier mode de réalisation du dispositif selon l'invention. Le porte-capsule 6 et l'unité d'alimentation en fluide sous pression 2 comprennent des moyens complémentaires d'insertion 7 configurés pour permettre l'insertion du porte-capsule 6 selon une direction privilégiée A dans l'unité. Les moyens 7 sont tels que le porte-capsule peut être détaché du dispositif. Par "détachable", on entend que le porte-capsule n'est relié en position "détachée" au dispositif, en particulier, à l'unité d'alimentation 7, par aucun moyen de connexion permanent et peut être transporté librement pour être vidé de sa capsule une fois celle-ci utilisée et pour être rechargé avec une nouvelle capsule 10. Le porte-capsule peut ainsi être rincé ou nettoyé facilement afin d'éliminer tout résidu alimentaire de sa surface.

Toutefois, l'invention peut se rapporter aussi à un porte-capsule non-détachable par rapport au dispositif ou à l'unité d'alimentation mais insérable à partir d'une position de tiroir ouvert dans l'unité d'alimentation. Une configuration de "tiroir ouvert" signifie que la course du porte-capsule est stoppée, lors du glissement en ouverture, par des moyens d'arrêt permettant le chargement d'une capsule sans devoir retirer complètement le porte-capsule. Il est entendu que le porte-capsule peut aussi être agencé de manière à prendre une position de tiroir ouvert et être détachable au besoin.

Les moyens complémentaires d'insertion 7 du porte-capsule dans l'unité d'alimentation peuvent être de différentes formes. Les moyens complémentaires sont préférablement arrangés pour permettre une insertion directe et sensiblement linéaire du porte-capsule dans l'unité d'alimentation par simple poussée de l'utilisateur sur le porte-capsule dans la direction d'insertion A. Le porte-capsule se trouve positionné dans une position de référence dans l'unité d'alimentation avant déplacement et en engagement des moyens d'injection avec la capsule.

Selon un mode pratique possible, les moyens d'insertion comprennent des nervures de guidage 18 et des rainures de guidage 19 complémentairement formées, respectivement, sur les côtés du porte-capsule 6 et sur les côtés internes de l'embase 20 de l'unité d'alimentation. Lesdits moyens d'insertion s'étendent latéralement et de préférence selon une direction sensiblement horizontale ou légèrement inclinée par rapport à l'horizontale (Par exemple, de quelques degrés seulement).

Du côté de l'unité d'alimentation de fluide 2, l'embase 20 est fixée au dispositif de manière non-mobile. Sur cette embase 20 est monté un support d'injection 4 sous forme de disque lequel est mobile relativement à l'embase. Le support d'injection dit "support mobile" dans le reste de la description selon ce mode de réalisation se déplace sous l'effet de moyens d'actionnement 22 faisant partie des moyens de serrage le long de l'embase et selon une cinématique sensiblement linéaire et sans rotation dans ce premier cas. Dans une configuration préférentielle de ce premier mode de réalisation de l'invention, la trajectoire du support mobile est entièrement linéaire.

Le support mobile 4 comprend des moyens d'injection 5 lesquels sont de préférence positionnés de manière excentrée par rapport à l'axe central O du support mobile et du centre O1 de la surface d'injection de la capsule lorsque celle-ci est en position d'injection dans le dispositif

Le déplacement purement axial et linéaire du support mobile engendre un engagement également axial et linéaire des moyens d'injection avec la capsule. Cet agencement favorise un perçage ou contact avec la capsule qui est parfaitement contrôlé. En particulier, en cas de perçage par les moyens d'injection de la capsule, les dimensions et la géométrie de l'orifice de perçage de la capsule par le moyen de perçage sont mieux définis. On peut alors garantir une étanchéité de manière locale, c'est à dire, autour des moyens d'injection et entre ceux-ci et la surface de la capsule. On peut aussi garantir de bonnes conditions de pression dans la capsule sans risque de fuite tout en gardant un mécanisme de fermeture simple et peu encombrant.

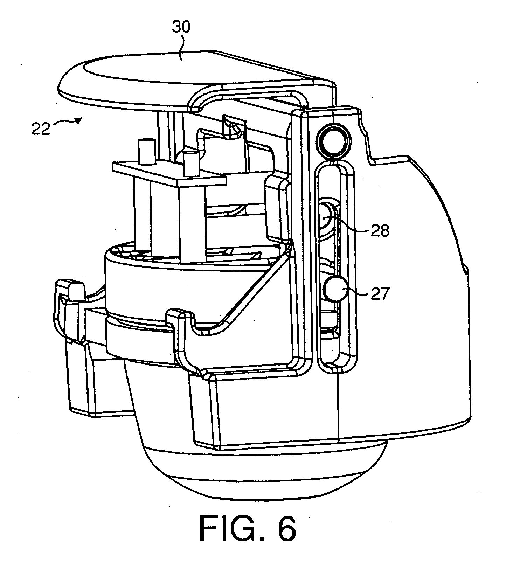

Le support mobile 4 est ainsi guidé en déplacement selon une direction verticale et perpendiculaire à la direction d'insertion du porte-capsule 6, par des moyens de guidage en translation 21. Ces moyens peuvent comprendre deux rainures de guidage 23 formés le long d'au moins deux branches 24, 25 de l'embase fixe dans lequel coulisse au moins une tige, de préférence, deux tiges 27, 28 à l'intérieur de chaque rainure 23 comme le montre la figure 6. Les rainures sont disposées sensiblement verticalement le long des branches. Les tiges 27, 28 pourraient être remplacées par un bossage unique de forme allongée et disposé dans le sens des rainures.

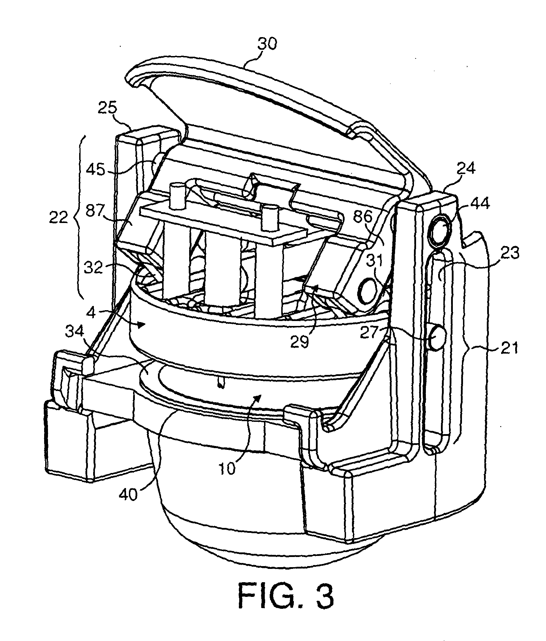

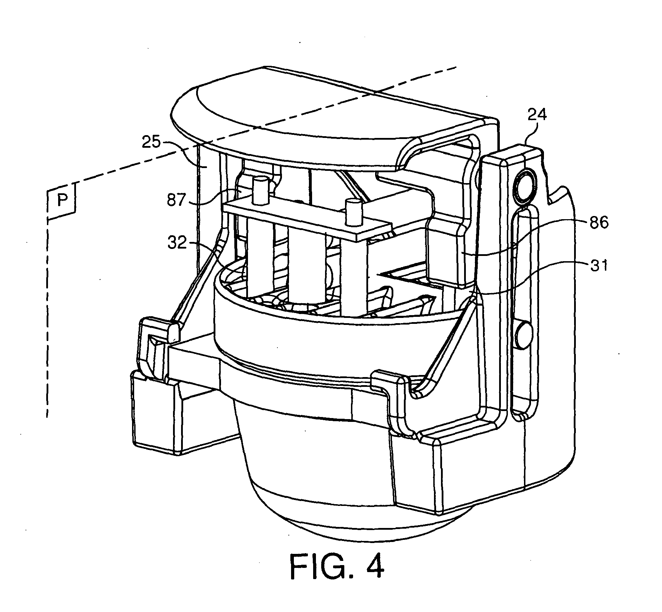

L'actionnement du support mobile de sa position ouverte, c'est à dire éloignée du porte-capsule (figure 3) à sa position d'injection (figure 4) est opéré par un système d'actionnement 22. Différents systèmes d'actionnement peuvent être envisagés. Selon le mode représenté, le moyen d'actionnement est une genouillère 29 associée à un levier manuel 30. Dans un mode automatisé, le levier pourrait être remplacé par un moteur. De préférence, les systèmes d'actionnement sont situés verticalement au dessus du support mobile et sont rattachés à l'embase. Plus précisément, le levier 30 comprend deux bras 86, 87 espacés latéralement et articulés, d'une part à l'extrémité des deux branches 24, 25 de l'embase fixe par deux axes fixes espacés latéralement 44, 45, et, d'autre part, à une paire de bras 31, 32 de la genouillère par deux autres axes mobiles 46, 47. La paire de bras 31, 32 est elle-même articulée sur le support mobile en forme de disque 4 par deux axes se prolongeant extérieurement dans les lumières par les tiges 27.

Il faut noter que le système d'actionnement 22 est, de préférence, associé à un moyen de rappel élastique (non représenté). Le moyen de rappel élastique peut être associé au levier et/ou à la genouillère de manière à replacer automatiquement le support d'injection en position haute ou à distance du porte-capsule en l'absence de forces de réaction exercées sur les moyens d'actionnement par les bords pincés de la capsule permettant le verrouillage du support par les moyens d'actionnement et de verrouillage. Comme exemple de moyen de rappel élastique, un ressort est prévu sur l'axe d'articulation 44 et/ou l'axe 45 pour ramener le levier automatiquement en position relevée selon la figure 2 en l'absence soit de porte-capsule soit de capsule dans le porte-capsule.

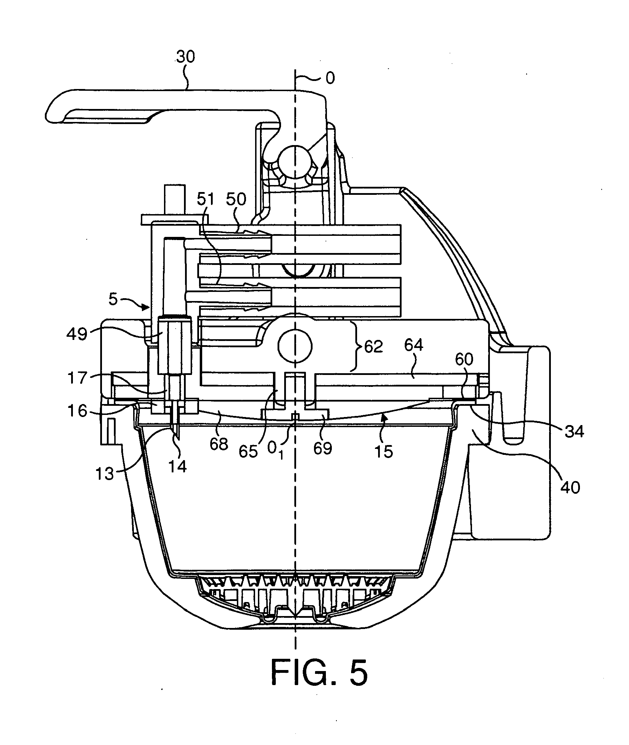

La figure 5 montre le détail de l'unité d'alimentation en fluide et de l'agencement du porte-capsule en position d'injection.

Selon un mode préférentiel de l'invention, les moyens d'injection 5 sont de mode intrusif dans la capsule. Ils peuvent comprendre par exemple une pointe d'injection 13 solidaire du support mobile 4 qui perfore la face supérieure de la capsule. La pointe est traversée par un conduit 14 d'amenée du liquide dans la capsule. La pointe d'injection se prolonge au travers du support et du côté opposé à la capsule par un ou plusieurs connecteurs 49. L'un des connecteurs peut comprendre une dérivation en deux entrées 50, 51 séparées permettant une alimentation de fluide chaud et une alimentation de fluide à température ambiante ou froide. Les entrées sont reliées à des tubes souples d'alimentation reliés, quant à eux, au reste du circuit de fluide. La sélection en fluide chaud ou froid pour alimenter les moyens d'injection peut être opérée par une ou plusieurs vannes (non représentées). Comme le montre la figure 5, la pointe d'injection se termine par un orifice de faible section, de préférence inférieure à 0.5 mm, permettant de diriger un jet de fluide à grande vitesse à l'intérieur de la capsule. De préférence, l'orifice est dirigé axialement par rapport au conduit 14 et en direction du fond de la capsule. La position excentrée, la direction et la haute vitesse du jet contribuent à générer une circulation turbulente du fluide à l'intérieur de la capsule et donc vise à d'améliorer la dissolution ou la dispersion de certains ingrédients y compris avec de l'eau froide comme fluide injecté.

Selon une possibilité de l'invention, l'étanchéité peut être réalisée sur une surface restreinte, localement et autour du point d'injection au travers de la surface de la capsule ou sur toute la surface d'injection de la capsule. Cette approche permet, entre autre, de réduire la force mécanique nécessaire à la fermeture étanche du système tout en résistant à de fortes pressions dans la capsule (par exemple, de l'ordre 5 à 20 bar) et de limiter la complexité mécanique du dispositif Pour une étanchéité locale, le moyen d'injection comprend un moyen d'étanchéité 16 sous forme d'une bague élastique entourant la base 17 de la pointe d'injection.

La bague d'étanchéité peut être d'épaisseur comprise entre 0.2 et 3 mm, de préférence entre 0.5 et 2 mm. Son diamètre dépend du diamètre de la portion intrusive de la pointe d'injection. Il est préférablement de 1.5 à 30 fois le diamètre de la pointe d'injection, de préférence entre 2 et 15 fois son diamètre. Il peut être prévu une ou plusieurs rainures circulaires entre la base de la pointe et la bague d'étanchéité pour améliorer l'étanchéité.

Selon autre possibilité de l'invention, l'étanchéité se fait sur toute la surface de la capsule. Il est alors prévu que toute la surface de contact du support 4, y compris la région locale autour de la pointe d'injection 13, est faite d'un matériau élastique d'étanchéité tel qu'un matériau élastomère ou silicone. Dans ce cas, la bague 16 est remplacée par toute la structure élastique de la surface inférieure du support.

La bague d'étanchéité ou encore la surface inférieure élastique du support d'injection peut être en matériau élastomère, en silicone ou en matériau plastique de faible dureté et élastiquement flexible. Il faut comprendre que la face d'injection de la capsule peut aussi être flexible. La surface peut être au départ légèrement convexe en raison de la présence de gaz contenu dans la capsule puis se déforme, dans ce cas, en partie sous l'effet de la pression mécanique axiale exercée par le moyen d'étanchéité 16. L'étanchéité par compensation des jeux est obtenue par l'association du moyen d'étanchéité 16 et par la déformation de la face d'injection de la capsule. La déformation de la face d'injection intervient lors de la mise sous pression de la capsule par le fluide d'injection. Il se crée alors des forces internes de poussée dans la capsule en direction du moyen d'étanchéité pour plaquer la surface 10 de la capsule contre ledit moyen.

Grace à l'étanchéité réalisée par la bague 16 ou de la surface élastique du support, le fluide injecté sous pression au travers de la pointe d'injection est bloqué directement au niveau de la base de l'orifice pratiqué par la pointe, ou à sa proximité immédiate, et ne peut donc pas ressortir entre la surface 10 de la capsule et celle du support mobile 4. On réduit aussi les surfaces du dispositif en contact avec le liquide en évitant des remontées possibles de liquide. Le système est aussi ainsi rendu étanche par rapport au porte-capsule et de manière indépendante du serrage du porte-capsule proprement-dit dans le dispositif.

Selon une caractéristique déjà évoquée, le support mobile d'injection 4 et ses moyens d'injection sont verrouillables en position d'injection par les moyens de serrage, en particulier, le système d'actionnement 22 selon une portion de serrage 60, lorsque le porte-capsule contient une capsule et le porte-capsule est inséré dans l'unité d'alimentation de fluide. Le support mobile 4 comprend une portion de surface de serrage 60 qui s'appuie sur une bordure 34 de la capsule. La bordure 34 repose elle-même en appui sur des bords d'appui ou de serrage 40 du porte-capsule. La bordure est donc pincée entre la portion 60 et les bords 40 du porte-capsule. Les moyens d'actionnement, en particulier, la genouillère actionnée pas le levier exercent donc des forces de serrage en compression qui sont transmises par le support mobile 4 à la bordure de la capsule. Le verrouillage de la genouillère obtenu par le passage du point "dur" de celle-ci se fait lorsque une capsule est donc présente dans le porte-capsule créant ainsi une surépaisseur nécessaire pour forcer le passage du point "dur" de la genouillère et donc obtenir une position stable de serrage du support. Ce serrage est important pour permettre d'assurer une sécurité dans l'immobilisation du porte-capsule dans le mode de fonctionnement sous pression de fluide dans la capsule. Le serrage contribue aussi à maintenir fermement la bordure 34 sur laquelle s'applique le scellage de la membrane 3 sur le corps de la capsule sans risque de délaminage de sa membrane 10 par rapport à la bordure du corps de la capsule.

Selon un mode possible, en cas d'absence de capsule ou de porte-capsule, l'abaissement du support mobile 4 au moyen du levier agissant sur la genouillère ne génère pas d'appui et donc ne génère pas des forces de réaction suffisantes sur la genouillère. Du fait de la présence d'un moyen de rappel élastique en association avec le levier et/ou la genouillère, le levier bascule en direction de la réouverture; ce qui fait remonter la genouillère à partir du moment où plus aucun appui n'est exercé sur le levier par l'utilisateur. Il est donc impossible de maintenir le support mobile en position stable abaissée lorsque le porte-capsule est enlevé ou la capsule n'est pas engagée dans le porte-capsule. Celui-ci est donc ramené en position d'ouverture; permettant ainsi le dégagement du porte-capsule ou bien l'insertion du porte-capsule avec sa capsule dans le dispositif

Dans un autre mode possible, même en cas d'absence de capsule dans le porte-capsule, le serrage du support mobile 4 contre le porte-capsule est rendu possible de manière étanche. L'étanchéité est effectuée par l'application de la surface de serrage 60, de préférence en matériau flexible (élastomère ou équivalent) contre les bords supérieurs du porte-capsule. Un avantage est ainsi de pouvoir fermer le dispositif même en cas d'absence de capsule dans le dispositif pour nettoyer l'ensemble. Le porte-capsule protège dans ce cas l'utilisateur contre d'éventuelles projections d'eau bouillante lors du nettoyage.

Selon un principe de l'invention, on comprend que les efforts de serrage sur le porte-capsule dans l'unité d'alimentation ne sont pas supportés directement par le moyen d'étanchéité agissant autour de la pointe d'injection. Il s'agit d'un avantage puisque la fonction d'étanchéité est dissociée de la fonction de serrage du porte-capsule dans l'unité; cette dernière ayant pour fonction d'éviter un désengagement possible du porte-capsule alors que le dispositif est sous pression. Cela permet aussi de réaliser l'étanchéité sur une partie flexible de la capsule et au plus près du point d'injection sans risquer de rupture de la surface d'injection de la capsule notamment lorsque celle-ci est une membrane flexible. Il s'ensuit que le moyen d'étanchéité est aussi moins sollicité en compression et donc garde plus longtemps ses propriétés de résilience et donc d'étanchéité.

Bien entendu, les moyens d'actionnement et de verrouillage du support mobile pourraient être d'une autre nature qu'une genouillère. Il pourrait s'agir d'une came ou d'une série d'engrenages.

L'épaisseur du support mobile peut être réglée par des moyens de réglage. Le réglage peut être nécessaire pour assurer le bon fonctionnement des moyens d'actionnement en tenant compte des phénomènes d'usure, de tolérances, de dilatation possible due à la chaleur, sur différents composants formant le système, à savoir, la capsule et le dispositif lui-même. Le réglage permet par exemple de régler la force de passage nécessaire à faire passer à la genouillère son point "dur". Les moyens de réglage permettent de régler la force de fermeture des moyens d'actionnement et influence donc la force exercée par les moyens d'injection contre la surface de la capsule pour assurer une bonne étanchéité sous des conditions de pressions élevées dans la capsule. Les moyens de réglage permettent de régler de manière la plus fine possible la sensation de fermeture pour l'utilisateur. L'utilisateur doit ainsi avoir la sensation d'une fermeture correcte et sécurisante mais également sans efforts excessifs.

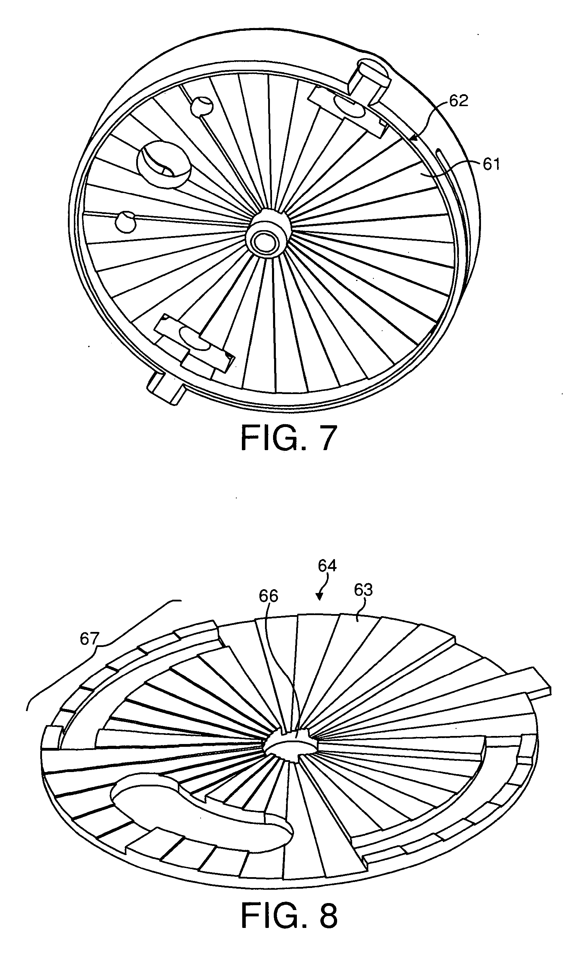

Le moyen de réglage peut comprendre un jeu de cales d'épaisseurs variables de la plaque du support mobile, par exemple comme le montrent les figures 7 et 8. Selon une réalisation préférentielle, un jeu de cales est formé par l'association d'une première structure de calage 61 appartenant à une première paroi 62 et d'une seconde structure de calage 63 appartenant à une seconde paroi 64 du support mobile. Les figures 5, 7 et 8 en montrent le principe. Les deux parois 62, 64 sont en forme de disque. Une troisième paroi inférieure 68 sert de support à la paroi 64. La paroi 64 inférieure est montée de manière à pouvoir être réglée en rotation par rapport à la paroi supérieure 62 qui est fixe. La paroi 62 comprend un pion central 65 dans lequel la paroi 64 s'insère par un trou central 66. Les deux parois 62, 64 possèdent des structures de calage comprenant des séries d'escaliers 67 formant différents niveaux de calage. A chaque série ou groupe de séries correspond une épaisseur prédéterminée du support mobile. L'épaisseur désirée est choisie en faisant tourner la paroi 64 par rapport à la paroi 62 de manière à placer les deux structures en coïncidence pour un calage d'épaisseur qui varie de manière progressive en fonction de la position relative en rotation. La paroi réglable en rotation 64 est accessible par une connexion démontable 69 telle qu'une vis qui s'insère dans le pion central 65 qui lui comprend un filetage interne.

Le moyen de réglage peuvent être omis notamment lorsque le support mobile possède une surface élastique s'étendant jusque dans la portion de serrage 60; ce qui permet de compenser naturellement les jeux mécaniques et/ou les variations dimensionnelles possibles des capsules.

Un autre problème de l'invention consiste à réduire le risque de créer un jet de liquide en dehors et du côté de la face d'injection de la capsule après le retrait des moyens d'injection, plus précisément de la portion intrusive de la pointe d'injection, en dehors de la capsule. Ce phénomène se produit en général, d'une part, du fait que la capsule ne se vide pas entièrement de son liquide après utilisation, d'autre part, du fait qu'il règne une surpression dans la capsule après l'injection. Pour palier à cet inconvénient, le dispositif selon l'invention propose une solution qui consiste diminuer le volume interne de la capsule avant l'injection et à rétablir le volume de la chambre au moment du retrait des moyens d'injection de la capsule. Cette variation de volume de la capsule permet de créer un volume d'absorption suffisant qui permet de compenser en partie au moins la surpression à l'intérieur de la capsule. Au lieu que la détente de gaz ne se produise à l'extérieur de la capsule par un jet de fluide, celle-ci s'effectue dans un volume expansible préétabli.

Pour cela, une solution consiste à prévoir une portion d'engagement 15 en relief du support mobile qui est configurée pour repousser la paroi 10 de la capsule vers l'intérieur de la capsule et diminuer ainsi le volume interne de la capsule. La surface d'engagement fait partie de la paroi inférieure 68 du support mobile. La surface d'injection de la capsule étant suffisamment flexible, par exemple, une membrane de quelques dixièmes de millimètres, celle-ci se déforme au contact de la surface d'engagement du support mobile lors de la mise en position d'injection. La surface d'engagement 15 épouse étroitement la membrane de la capsule lors de l'injection du fait de la pression interne régnant dans la capsule qui gonfle la membrane en direction de ladite surface 15. La surface d'engagement 15 pourrait être faite d'un matériau élastique faisant office d'élément d'étanchéité sur la surface de la capsule. Dans ce cas, la bague 16 peut être remplacée par une paroi élastique d'étanchéité qui recouvre sensiblement toute la membrane 10 de la capsule. La paroi élastique d'étanchéité peut aussi s'étendre au delà jusqu'à la portion de serrage 60. Une telle configuration réduit le nombre de pièces et permet de garantir une compensation des jeux ainsi qu'une étanchéité même si la membrane était perforée accidentellement avant son insertion dans le porte-capsule ou délaminée lors de la montée en pression.

Lorsque le support mobile est retiré, la surface d'engagement 15 n'exerce plus de poussée contre la capsule et la surface d'injection tend à reprendre en partie au moins sa position d'origine ou même convexe par l'effet de détente de gaz à l'intérieur de la capsule.

La paroi du support peut ainsi former une portion d'engagement 15 convexe qui s'imprime dans la surface supérieure de la capsule en repoussant celle-ci vers l'intérieur de la capsule.

Préférablement, les moyens d'injection sont agencés selon une configuration excentrée par rapport à l'axe central O dudit support mobile. De même, le point le plus en relief de ladite surface est latéralement distant des moyens d'injection. Le point et la hauteur de convexité dépendent de la surface d'engagement, du volume de la capsule et d'autres facteurs permettant de produire un enfoncement permettant de ménager un espace de détente interne suffisant dans la capsule. L'épaisseur maximale de la partie en relief de la surface d'engagement 15 par rapport à la base peut être d'environ 2 à 5 mm.

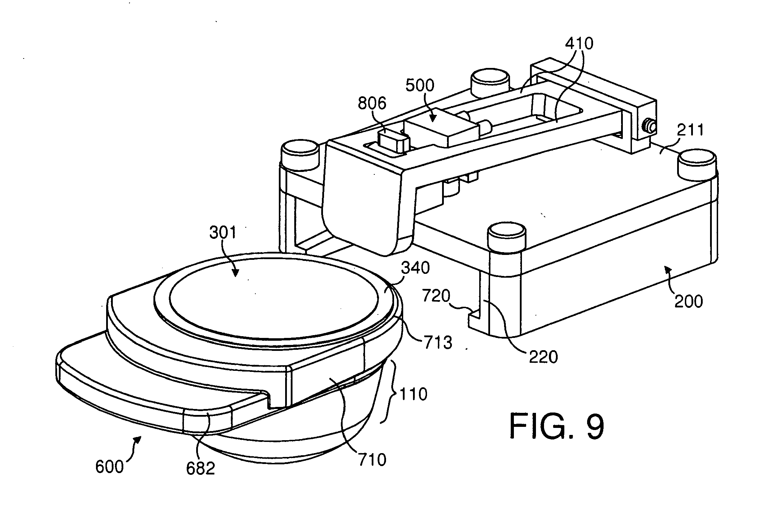

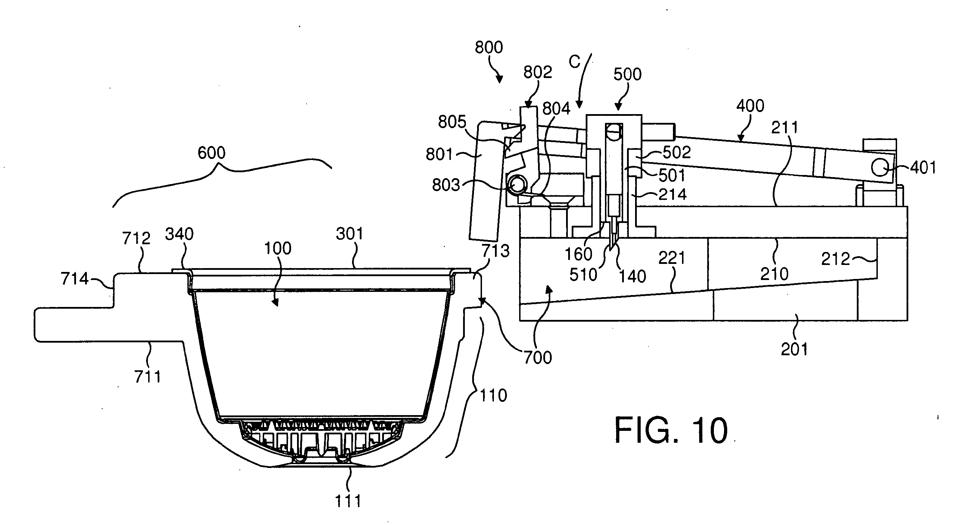

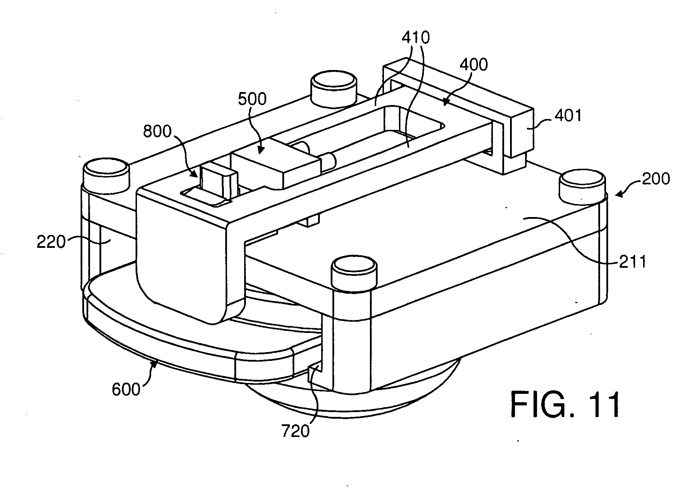

Un second mode possible de réalisation est illustré aux figures 9 à 12. Comme dans le mode précédent, le dispositif comprend un porte-capsule 600 détachable de l'unité d'alimentation de fluide 200 laquelle est solidaire du reste du dispositif comme selon la figure 1. Le porte-capsule possède une portion de support libre 110 largement ouverte vers le haut laquelle forme une coque pour recevoir une capsule 100 et possédant une ouverture de délivrance 111 du côté opposé de moins grande section pour laisser passer le liquide à partir de la face de délivrance de la capsule. La capsule repose ainsi dans la cavité formée par la portion libre ou coque et ses bords 340 s'agencent en appui contre les bords supérieurs 713 du porte-capsule.

Le porte-capsule est agencé pour être inséré le long des bords de l'unité d'alimentation par simple glissement. Le porte-capsule possède un manche 682 pour une manipulation aisée lors de l'insertion et du retrait. Le porte-capsule et l'embase fixe 201 de l'unité possèdent des moyens complémentaires d'insertion en forme de coin 700. Le principe de ces moyens est de permettre une insertion en glissement puis un coincement suffisant du porte-capsule dans l'embase dans sa position d'insertion sous l'effet conjugué de la géométrie des moyens complémentaire d'insertion et de la pression de fluide exercée dans la capsule. Dès la mise en pression du système, les forces de frottement entre la capsule et l'unité d'alimentation augmentent de manière telle qu'un serrage contre le porte-capsule s'effectue et que le porte-capsule ne peut ainsi plus être retiré par l'utilisateur même en l'absence d'un verrou mécanique.

Pour cela, le porte-capsule 600 comprend deux bords latéraux formant des nervures 710 possédant une épaisseur variable. Plus précisément, les bords ou arêtes ont une épaisseur qui décroit en direction de l'extrémité d'insertion libre du porte-capsule. L'arête inférieure 711 des bords latéraux forme une pente et converge en direction de l'arête supérieure 712 dans le sens d'insertion du porte-capsule dans l'unité. Les nervures possèdent donc une épaisseur définie par les arêtes 711, 712 qui se réduit progressivement en direction de l'extrémité libre 713 du porte-capsule.

Du côté de l'unité d'alimentation, l'embase fixe 201 comprend une portion en forme de U renversé avec une surface d'engagement transversale supérieure 210 et deux bords latéralement espacés 220 se prolongeant vers le bas pour former des rainures de guidage 720. Les nervures possèdent une hauteur variable notamment avec une surface de retenue 221 qui convergent en direction de la surface d'engagement transversale 210 et du fond 212 de l'embase. On comprend donc qu'au fur et à mesure de l'insertion du porte-capsule 600 dans l'unité d'alimentation, les bords supérieurs 713 du porte-capsule se rapprochent progressivement de la surface d'engagement 210 de l'embase. L'angle formé par les nervures du porte-capsule et l'angle formé par les rainures peuvent être différents de quelques degrés afin de permettre un coincement sous l'effet de la pression dans la capsule. On remarque aussi que la partie avant du porte capsule étant plus éfilée que la partie vers le manche, la pointe 140 des moyens d'injection ne perturbe pas l'entrée du porte-capsule et, en particulier, ne lacère pas la surface supérieure de la capsule.

La pente formée par les moyens d'insertion 700 en forme de coin permet aussi de positionner le porte-capsule, une fois celui-ci inséré dans l'embase, avec quelques degrés d'inclinaison par rapport à l'horizontal. Cette inclinaison sert à réduire fortement, voire à éliminer le phénomène de résurgence en gardant la capsule inclinée et en maintenant un volume de gaz et/ou d'air autour du point d'injection, ce qui fait que lors du retrait des moyens d'injection, un volume suffisant de gaz et/ou de l'air s'échappe au lieu du liquide sous pression. L'inclinaison est maintenue dans cette position jusqu'au retrait de la pointe d'injection de la capsule. En particulier, l'arête ou surface de retenue 221 des rainures de guidage de l'embase est de préférence à l'horizontale de façon à surélever l'arrière de la capsule, c'est à dire du côté manche, et, par conséquent, le point d'injection de la capsule. De ce fait, lors du retrait du porte-capsule par glissement, la capsule 100 reste inclinée (en penchant vers l'avant et vers le bas) pour maintenir le niveau de liquide dans la capsule en dessous du point d'injection.

On comprend donc bien que les moyens d'insertion en forme de coin peuvent avoir deux fonctions; une première fonction de serrage "autobloquante" et une seconde fonction de surélévation du point d'injection pour éviter les résurgences liquides.

L'unité d'alimentation peut comprendre un moyen de verrouillage 800 dont la fonction principale est de verrouiller les moyens d'injection en position d'injection relativement à la capsule.

Le moyen de verrouillage peut avoir la fonction additionnelle d'assurer le maintien en place du porte-capsule en position d'insertion dans l'unité; le moyen de verrouillage servant aussi alors à s'assurer que le porte-capsule a atteint sa position d'insertion finale, c'est à dire qu'il a été suffisamment engagé dans l'unité d'alimentation.

Avantageusement, ce moyen de verrouillage est solidaire d'un levier 400; lequel commande l'actionnement des moyens d'injection 500, de sorte que le verrouillage du porte-capsule est réalisé de façon concomitante avec l'engagement en l'injection des moyens d'injection 500 solidaires du support avec la capsule et par actionnement manuel du support mobile.

Ainsi, le levier 400 est articulé sur l'embase mobile selon un axe transversal 401 sensiblement parallèle à la surface de l'embase 210. Le support et/ou les moyens d'injection eux-mêmes comprennent des moyens de retour élastique permettant un retour des moyens d'injection en position "haute" ou désengagée par rapport à la capsule. De préférence, un ressort 502 est associé aux moyens d'injection.

Le levier 400 transmet aux moyens d'injection 500 l'effort manuel de l'utilisateur de fermeture illustrée par la direction descendante selon la flèche C. Le support est donc capable de pivoter entre une position dans laquelle les moyens d'injection 500 sont verticalement distants de la capsule ou du porte-capsule en position d'insertion et une position d'injection dans laquelle les moyens d'injection sont engagés contre ou autre travers de la capsule. Le support 500 possède deux bras latéraux 410 ménageant ainsi une fente centrale qui permet aux moyens d'injection 500 d'être guidés par rapport au support de façon à transformer la rotation du support en une translation des moyens d'injection.

Il faut noter que le support est positionné sur la surface supérieure 211 de l'embase de sorte que les moyens d'injection 500 doivent traverser l'embase pour s'engager au contact de la capsule lors du mouvement du levier. Les moyens d'injection comprennent une portion de guidage 501, par exemple cylindrique, guidée au travers de l'embase par un passage délimité au travers d'une douille 214. De ce fait, l'effort en rotation du support est transmis en un effort linéaire sur les moyens d'injection qui s'insèrent dans la capsule de manière perpendiculaire à la surface d'injection.

Il faut noter que le support 500 et les moyens de verrouillage 800 peuvent prendre diverses formes. Ainsi, on peut concevoir une solution plus compacte dans laquelle les moyens d'injection forment un bouton-poussoir pour passer d'une position engagée ou "enfoncée" à une position désengagée par simple pression manuelle exercée sur le dessus du moyen 500.

Les moyens d'injection se terminent en direction du porte-capsule par une pointe d'injection 510 traversée par un conduit d'amené d'eau 140. La pointe d'injection est munie sur son pourtour d'un moyen d'étanchéité local 160. Ce moyen d'étanchéité peut être formé par une pièce spécifique d'étanchéité comme une bague élastomérique ou autre ou être simplement un prolongement annulaire transversal de la portion de guidage 501 apte à prendre appui contre la surface d'injection 301 de la capsule.

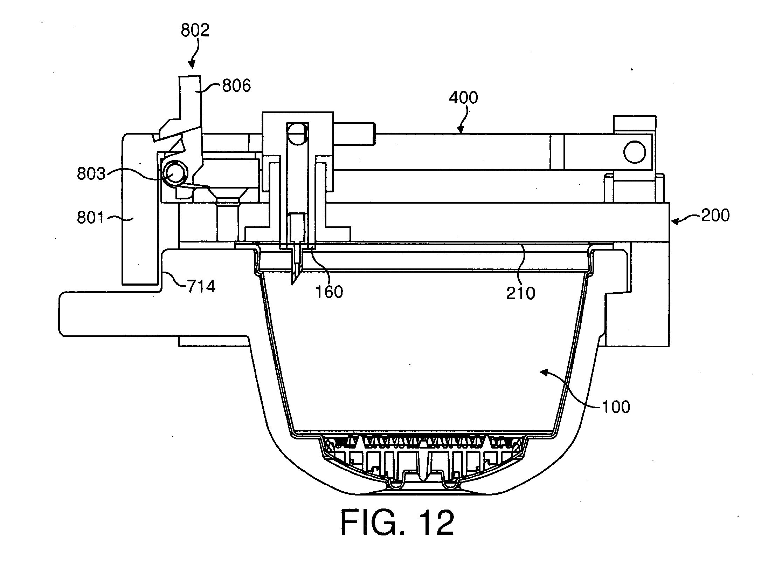

Comme déjà mentionné, à l'extrémité opposée à l'axe d'articulation 401 du support 400 et de l'embase 200, est disposé un moyen de verrouillage 800 du porte-capsule. Ce moyen comprend une paroi d'arrêt 801 prolongeant le support vers le bas. Le moyen peut ainsi être actionné par l'utilisateur une fois le porte-capsule inséré dans l'embase. La paroi d'arrêt s'engage alors en verrouillage contre un bord transversal 714 du porte-capsule comme le montre la figure 12. La paroi est maintenue en position de verrouillage par un verrou 802 lequel est monté en rotation sur l'embase selon un axe 803 et à l'encontre d'un ressort 804 et comprend une portion d'engagement 805 avec le support et une gâchette actionnable 806 pour repousser la portion d'engagement en position d'ouverture du verrou.

Le mode de fonctionnement de ce second mode de l'invention est le suivant. Le porte-capsule est rechargé avec une capsule neuve puis est inséré dans l'unité d'alimentation selon les moyens de guidage 700. Avant insertion, le support d'injection 500 est en position haute et la paroi 801 est donc dégagée par rapport à l'entrée de l'unité d'alimentation. Le porte-capsule est inséré dans l'embase en glissement selon les moyens d'insertion 700. Une fois en position finale d'insertion, l'utilisateur peut refermer le verrou en appuyant sur l'extrémité avant du support 400 formant ainsi un levier de verrouillage. Le moyen de verrouillage 800 s'engage alors au moyen du verrou 802 et le porte-capsule ne peut être désengagé sans actionner la gâchette 802 en ouverture. L'injection du fluide dans la capsule peut alors commencer en actionnant le moyen de commande 42. L'effet d'injection du fluide dans la capsule produit le serrage de la surface interne 210 contre les bords 340 de la capsule dans le porte-capsule rendant ainsi le porte-capsule fermement inséré dans l'unité d'alimentation. Après injection du fluide dans la capsule et délivrance de la boisson au travers de celle-ci, l'utilisateur peut libérer le porte-capsule en actionnant la gâchette 802 en ouverture. Le support mobile 400 remonte alors en position haute sous l'effet du support d'injection 500 qui le repousse en raison du ressort de rappel 214. La remontée du support d'injection 500 désengage la pointe de la capsule. Un dégazage se produit au travers du point d'injection jusqu'à équilibre des pressions entre l'intérieur de la capsule et l'extérieur. Le porte-capsule peut alors être retiré par glissement tout en maintenant le niveau de liquide dans la capsule en dessous du point d'injection du fait de l'inclinaison maintenue par le porte-capsule dans l'unité d'injection.

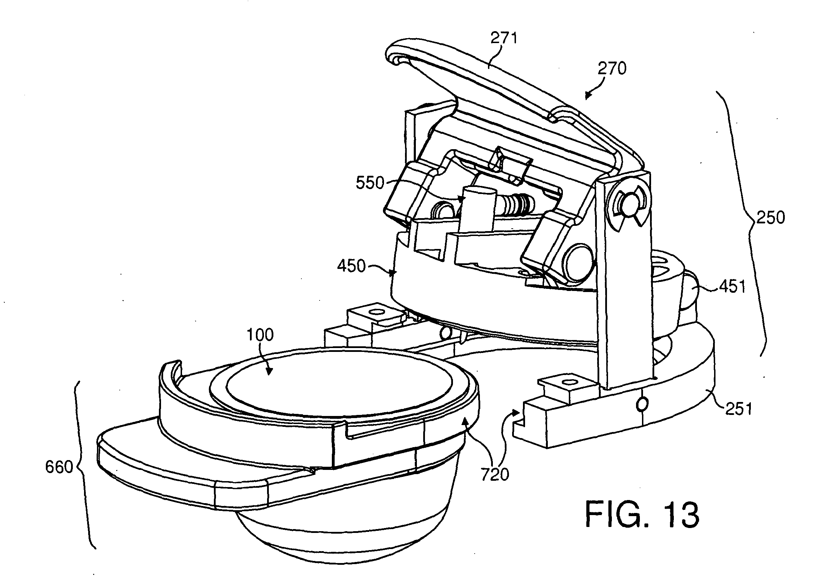

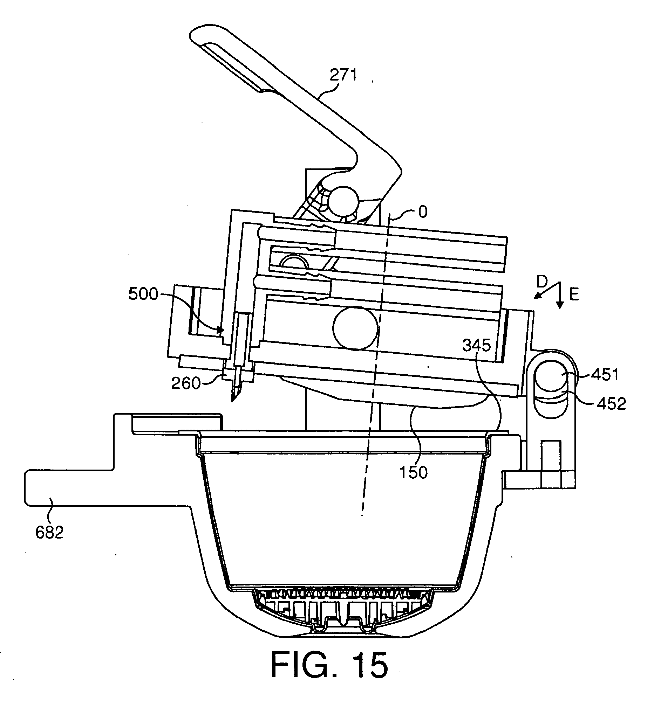

Les figures 13 à 16 illustrent un troisième mode de réalisation possible de l'invention. Le dispositif comprend comme selon les modes précédents un porte-capsule 660 détachable par rapport à une unité d'alimentation en fluide sous pression 250 et insérable selon des moyens d'insertion 720 sensiblement identiques à ceux 7 du mode de réalisation des figures 1 à 6. Ce troisième mode comprend aussi des moyens d'injection 550 supportés par un support mobile 450 lequel est actionné par des moyens d'actionnement 270, comme une genouillère et un levier 271, tels que ceux décrits précédemment.

Une différence essentielle réside toutefois dans le déplacement des moyens d'injection contre la capsule. En effet, dans ce mode de réalisation, le support mobile 450 est monté selon un axe d'articulation 451 situé sur le côté avant du support et agencé en guidage axial de telle manière à permettre un déplacement combiné, à la fois en translation et en rotation, du support mobile contre le porte-capsule. Plus précisément, le support mobile comprend un axe 451 parallèle au plan transversal du support 450, monté dans un ou plusieurs logements de guidage axial ou lumières 452 de l'embase 251, orientée parallèlement à l'axe central du logement du porte-capsule, permettant à la fois un mouvement du support selon une direction D en rotation et une direction E en translation axiale. Les avantages par rapport aux modes précédents sont essentiellement liés à une adaptation permettant la compensation des jeux fonctionnels en évitant les usures par rapport à une cinématique purement linéaire et axiale tout en permettant un désengagement des bords 345 de la capsule lors de la réouverture. Le support est actionné par un levier 271.

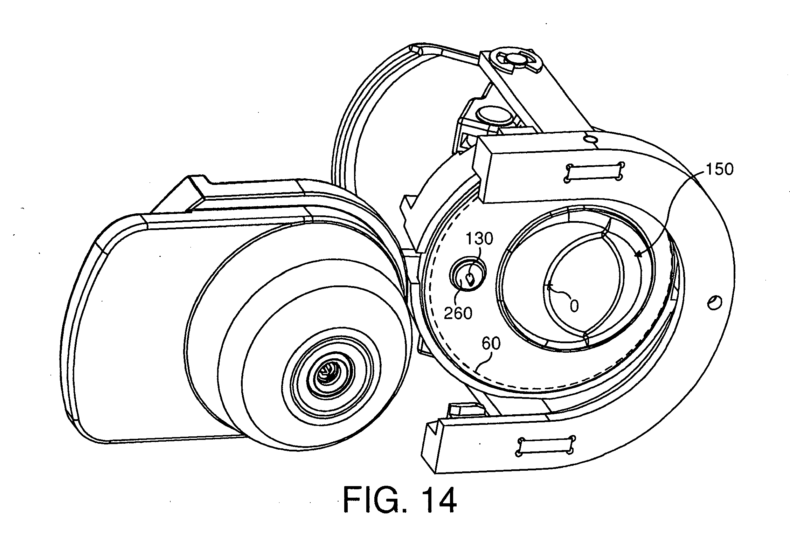

Comme dans le montrent les figures 14 à 16, le support mobile comprend une portion d'engagement 150 de forme convexe laquelle permet de réduire le volume de la capsule lors de la fermeture pour les même raisons que celles précédemment décrites. La portion d'engagement 150 occupe partiellement la surface du support mobile et est séparée de la pointe d'injection 130; laquelle est excentrée par rapport à l'axe central O du support.

Le support mobile peut comprendre une bague ou relief local 260 en matériau élastique 160. Cette bague ou relief peut être remplacée par une surface inférieure du support partiellement ou entièrement en revêtement en matériau élastique, y compris la surface d'engagement 150.

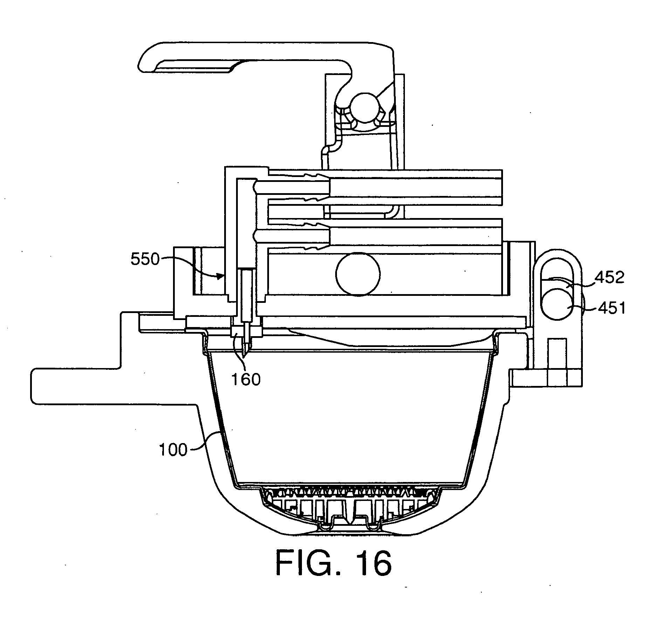

Comme le montre la figure 14, le support d'injection 450 possède une portion de serrage 60 (matérialisée par les lignes pointillées) localisée à la périphérie de la surface inférieure du support. Cette portion peut être aussi matériau élastique. La portion de serrage 60 s'ajuste en appui sur la bordure 345 de la capsule lors de l'engagement de la portion d'injection contre la capsule (figure 16). On comprend donc que l'étanchéité est essentiellement réalisée immédiatement autour de la pointe d'injection par la bague ou le relief 260 et que la portion de serrage a pour fonction essentielle de bloquer le porte-capsule en place et éviter le délaminage du cordon de scellage de la capsule.

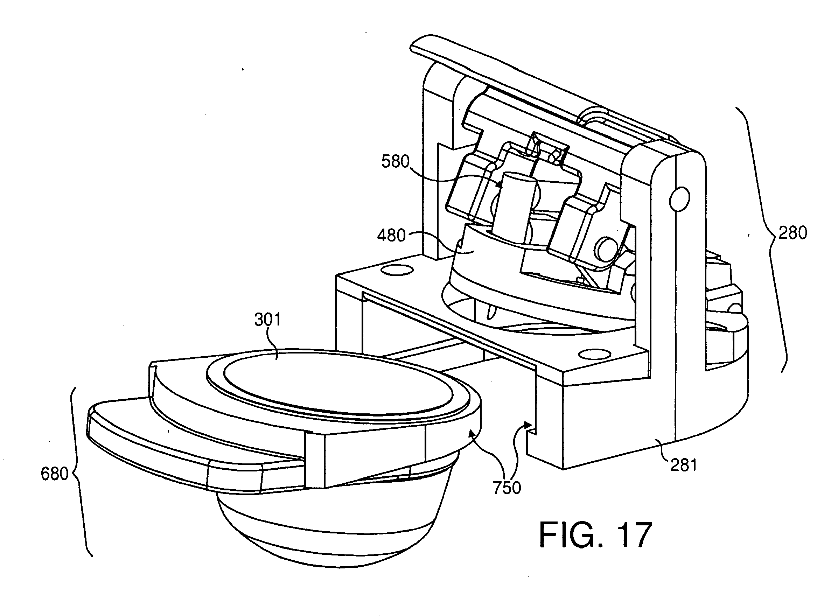

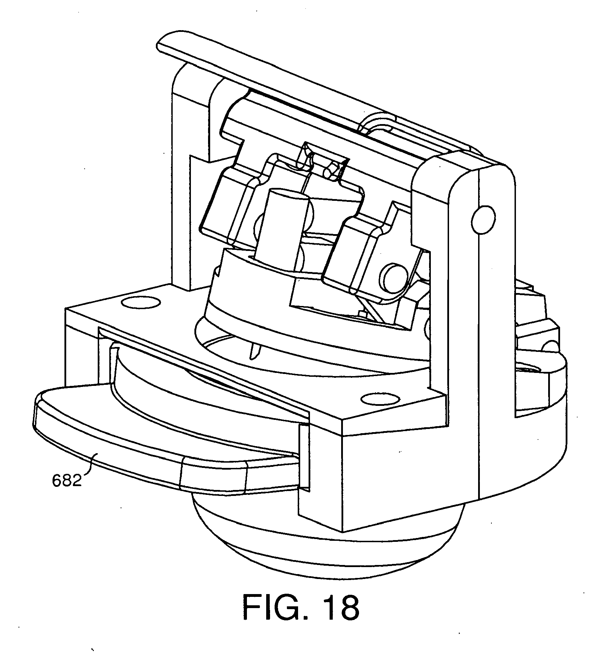

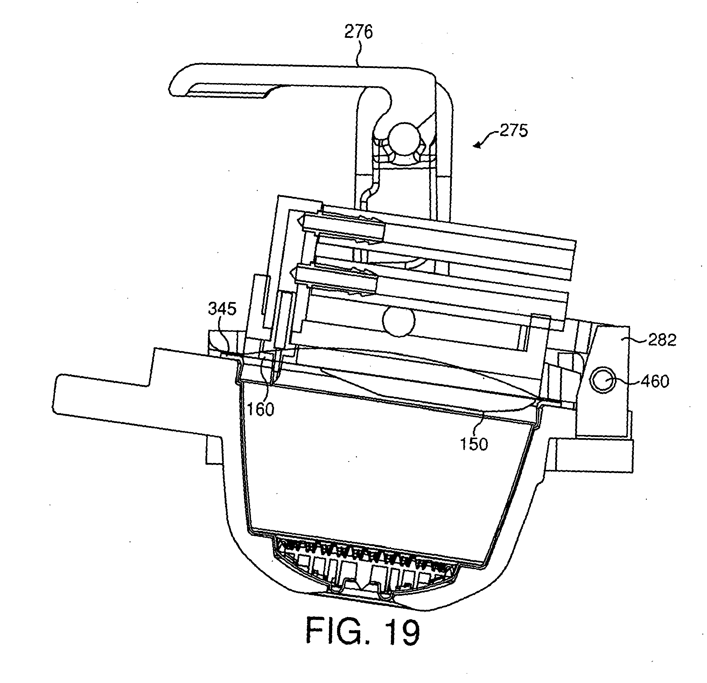

Les figures 17 à 19 montrent un autre mode de réalisation de l'invention. Dans ce cas, le porte-capsule 680 et l'embase 281 de l'unité d'alimentation 280 sont munis de moyens d'insertion en forme de coin 750 identiques à ceux décrits dans le mode des figures 9 à 12. L'unité d'alimentation possède, quant à elle, un support 480 sur lequel s'agencent les moyens d'injection 580 lesquels sont déplaçables dans une direction combinant rotation et déplacement axial. Plus précisément, le support mobile 480 en forme de disque est monté sur une portion fixe d'extension 282 de l'embase selon un axe de rotation 460 situé sur le côté, par exemple à l'arrière, du disque. Le support mobile est actionné par des moyens d'actionnement 275 du type à genouillère et un levier 276 comme dans le mode des figures 1 à 6. Les moyens d'injection sont identiques à ceux des modes des figures 1 à 6. Lors de la fermeture, un serrage sur les bords 345 de la capsule s'effectue par une portion de serrage de forme annulaire du support mobile 480. De même, le support mobile comprend une surface 150 d'engagement de forme convexe laquelle permet de réduire le volume de la capsule lors de la fermeture pour les même raisons que celles précédemment décrites.

Bien entendu, l'invention n'est pas non plus limitée aux modes de réalisations ainsi décrit mais s'étend à d'autres modes possibles dans le cadre de la portée des revendications figurant en annexe.

## Revendications

1. Dispositif pour la préparation d'un liquide alimentaire à partir d'une capsule comprenant:
- une unité d'alimentation (2, 200, 250, 280) en fluide d'injection dans la capsule (10, 100),
- un porte-capsule (6, 600, 660, 680) configuré pour recevoir et supporter une capsule; ledit porte-capsule étant détachable de l'unité,
- des moyens complémentaires d'insertion (7, 700, 720, 750) configurés pour permettre l'insertion du porte-capsule à partir de sa position détachée;
- des moyens d'injection (5, 500, 550, 580) étant prévus au travers d'un support d'injection (4, 200, 450, 480) de l'unité d'alimentation (2, 200, 250, 280); lesdits moyens d'injection étant mobiles en engagement relativement à la capsule (10, 100) contenue dans le porte-capsule,
un moyen d'étanchéité (16, 160) étant prévu en association avec les moyens d'injection (5, 500, 550, 580) pour réaliser l'étanchéité au moins localement et directement entre lesdits moyens d'injection et la surface d'injection (3, 301) de la capsule,
des moyens de serrage (22, 60, 700, 270, 275) étant prévus pour appliquer un effort de serrage de l'unité d'alimentation contre des bords d'appui (40, 713) du porte-capsule et/ou des bords (34, 340, 345) de la capsule,
**caractérisé en ce que** les moyens de serrage comprennent une portion de serrage (60) du support d'injection (4, 200, 450, 480) destinée à s'engager au moins selon une composante axiale avec une bordure (34, 345) de la capsule laquelle repose sur un bord d'appui (40, 713) du porte-capsule;
laquelle portion de serrage (60) des moyens de serrage et les bords d'appui (34, 345) du porte-capsule formant une surface de serrage avec la bordure (34, 345) de la capsule sensiblement circonférentielle et continue.

2. Dispositif selon la revendication 1, **caractérisé en ce que** le moyen élastique d'étanchéité (16, 160) entoure localement la base (17) d'une pointe d'injection (13, 130).

3. Dispositif selon la revendication 2, **caractérisé en ce que** le moyen élastique d'étanchéité s'étend sur une surface du support d'injection (4, 200, 450, 480) destinée à recouvrir entièrement la surface d'injection (3, 301) de la capsule.

4. Dispositif selon la revendication 3, **caractérisé en ce que** le moyen d'étanchéité s'étend sur la portion de serrage (60) du support d'injection (4, 200, 450, 480).

5. Dispositif selon les revendications 2, 3 ou 4, **caractérisé en ce que** le moyen d'étanchéité est en élastomère ou silicone.

6. Dispositif selon l'une quelconque des revendications précédentes, **caractérisé en ce que** le support d'injection (4, 200, 450, 480) comprend une portion d'engagement (15, 150) en relief prévue pour repousser une paroi flexible (3, 301) de la capsule vers l'intérieur de la capsule.

7. Dispositif selon la revendication 6, **caractérisé en ce que** la surface d'engagement est elle-même un moyen élastique réalisant l'étanchéité sur la paroi de la capsule.

8. Dispositif selon l'une des revendications précédentes, **caractérisé en ce que** les moyens d'injection (5, 500, 550) sont localisés dans une région excentrée par rapport à l'axe central (O) du support d'injection.

9. Dispositif selon l'une quelconque des revendications précédentes, **caractérisé en ce que** les moyens d'injection (5, 500, 550) sont formés d'au moins une pointe d'injection (13, 510).

10. Dispositif selon l'une quelconque des revendications 1 à 9, **caractérisé en ce que** les moyens d'injection (5, 500) sont mobiles selon une trajectoire rectiligne.

11. Dispositif selon l'une quelconque des revendications 1 à 10, **caractérisé en ce que** les moyens d'injection (550) sont mobiles selon une trajectoire combinant au moins une composante en rotation et une composante axiale.

12. Dispositif selon l'une quelconque des revendications précédentes, **caractérisé en ce que** les moyens complémentaires d'insertion (7, 700, 720, 750) du porte-capsule (6, 600, 660, 680) et de l'unité d'alimentation (2, 200, 250, 280) de fluide comprennent des nervures (18, 710) et des rainures (19, 720) de guidage permettant l'insertion du porte-capsule en glissement dans l'unité d'alimentation de fluide.

13. Dispositif selon l'une quelconque des revendications précédentes, **caractérisé en ce que** les moyens de serrage (22, 270, 275) comprennent une genouillère (29) ou une came actionnée par un levier (30, 271, 276).

14. Dispositif selon l'une quelconque des revendications précédentes, **caractérisé en ce que** les moyens complémentaires d'insertion (700, 750) forment des moyens de serrage agencés pour bloquer le porte-capsule en position d'insertion par effet de l'injection du fluide sous pression dans la capsule.

15. Dispositif selon la revendication 14, **caractérisé en ce que** les moyens complémentaires d'insertion (700) sont en forme de coin.

16. Dispositif selon la revendication 15, **caractérisé en ce que** les moyens complémentaires d'insertion (700, 750) comprennent des nervures (710) associées à des rainures (720) de hauteur progressivement variable.

17. Combinaison d'un dispositif selon l'une quelconque des revendications précédentes et d'une capsule (10, 100) **caractérisée que** la capsule comprend un corps comprenant une bordure (34) sur laquelle est scellée une membrane flexible formant la paroi d'injection.

## Claims

1. Device for the preparation of a food-grade liquid from a capsule comprising:
- a supply unit (2, 200, 250, 280) for injecting fluid into the capsule (10, 100),
- a capsule holder (6, 600, 660, 680) configured to receive and hold a capsule; said capsule holder being detachable from the unit,
- complementary insertion means (7, 700, 720, 750) configured to permit the insertion of the capsule holder from its detached position;
- injection means (5, 500, 550, 580) being provided via an injection support (4, 200, 450, 480) of the supply unit (2, 200, 250, 280); said injection means being mobile in engagement relative to the capsule (10, 100) contained in the capsule holder,
- a sealing means (16, 160) being provided in association with the injection means (5, 500, 550, 580) to provide the seal at least locally and directly between said injection means and the injection surface (3, 301) of the capsule,
- clamping means (22, 60, 700, 270, 275) being provided to apply a force clamping the supply unit against the bearing edges (40, 713) of the capsule holder and/or the edges (34, 340, 345) of the capsule,
**characterised in that** the clamping means comprise a clamping portion (60) of the injection support (4, 200, 450, 480) intended to be engaged at least along an axial component with an edge (34, 345) of the capsule which rests on a bearing edge (40, 713) of the capsule holder;
- said clamping portion (60) of the clamping means and the bearing edges (34, 345) of the capsule holder forming a clamping surface with the edge (34, 345) of the capsule which is substantially circumferential and continuous.

2. Device according to Claim 1, **characterised in that** the resilient sealing means (16, 160) locally surrounds the base (17) of an injection point (13, 130).

3. Device according to Claim 2, **characterised in that** the resilient sealing means extends over one surface of the injection support (4, 200, 450, 480) intended to cover entirely the injection surface (3, 301) of the capsule.

4. Device according to Claim 3, **characterised in that** the sealing means extends over the clamping portion (60) of the injection support (4, 200, 450, 480).

5. Device according to Claims 2, 3 or 4, **characterised in that** the sealing means is made of elastomer or silicone.

6. Device according to any one of the preceding claims, **characterised in that** the injection support (4, 200, 450, 480) comprises a raised engagement portion (15, 150), provided to push back a flexible wall (3, 301) of the capsule towards the interior of the capsule.

7. Device according to Claim 6, **characterised in that** the engagement surface is itself a resilient means producing the seal on the wall of the capsule.

8. Device according to one of the preceding claims, **characterised in that** the injection means (5, 500, 550) are located in an eccentric region relative to the central axis (O) of the injection support.

9. Device according to any one of the preceding claims, **characterised in that** the injection means (5, 500, 550) are formed by at least one injection point (13, 510).

10. Device according to any one of Claims 1 to 9, **characterised in that** the injection means (5, 500) are mobile in a rectilinear trajectory.

11. Device according to any one of Claims 1 to 10, **characterised in that** the injection means (550) are mobile in a trajectory combining at least one rotational component and one axial component.

12. Device according to any one of the preceding claims, **characterised in that** the complementary insertion means (7, 700, 720, 750) of the capsule holder (6, 600, 660, 680) and of the fluid supply unit (2, 200, 250, 280), comprise guide ribs (18, 710) and guide grooves (19, 720), permitting the insertion of the capsule holder by sliding into the fluid supply unit.

13. Device according to any one of the preceding claims, **characterised in that** the clamping means (22, 270, 275) comprise a toggle lever (29) or a cam actuated by a lever (30, 271, 276).

14. Device according to any one of the preceding claims, **characterised in that** the complementary insertion means (700, 750) form clamping means arranged to lock the capsule holder in the insertion position under the action of the injection of pressurised fluid into the capsule.

15. Device according to Claim 14, **characterised in that** the complementary insertion means (700) are wedge-shaped.

16. Device according to Claim 15, **characterised in that** the complementary insertion means (700, 750) comprise ribs (710) associated with grooves (720) of progressively variable height.

17. Combination of a device according to any one of the preceding claims and a capsule (10, 100), **characterised in that** the capsule comprises a body comprising an edge (34) onto which a flexible membrane forming the injection wall is sealed.

## Patentansprüche

1. Vorrichtung zur Herstellung einer Lebensmittel-Flüssigkeit ausgehend von einer Kapsel, wobei diese Vorrichtung umfasst:
- eine Einheit zum Einspeisen (2, 200, 250, 280) eines Einspritzfluids in die Kapsel (10, 100),
- einen Kapselhalter (6, 600, 660, 680), der dazu ausgeführt ist, eine Kapsel aufzunehmen und zu halten, wobei dieser Kapselhalter aus der Einheit herausgenommen werden kann,
- komplementäre Einsetzmittel (7, 700, 720, 750), die dazu ausgeführt sind, das Einsetzen des in herausgenommener Stellung befindlichen Kapselhalters zu ermöglichen,
- Einspritzmittel (5, 500, 550, 580), die durch eine Einspritzhalterung (4, 200, 450, 480) der Einheit zum Einspeisen (2, 200, 250, 280) verlaufend vorgesehen sind, wobei sich diese Einspritzmittel in beweglichem Eingriff gegenüber der in dem Kapselhalter enthaltenen Kapsel (10, 100) befinden,
wobei ein Abdichtungsmittel (16, 160) in Verbindung mit den Einspritzmitteln (5, 500, 550, 580) vorgesehen ist, um die Dichtigkeit zumindest örtlich begrenzt und direkt zwischen diesen Einspritzmitteln und der Einspritzoberfläche (3, 301) der Kapsel herzustellen,
wobei Klemm-Mittel (22, 60, 700, 270, 275) vorgesehen sind, um eine Kraft zum Festklemmen der Einspeise-Einheit an Anlagerändern (40, 713) des Kapselhalters und /oder Rändern (34, 340, 345) der Kapsel auszuüben,
**dadurch gekennzeichnet,**
**dass** die Klemm-Mittel einen Klemm-Abschnitt (60) zum Festklemmen der Einspritzhalterung (4, 200, 450, 480) beinhalten, der dazu bestimmt ist, mindestens in einer axialen Komponente mit einer Umrandung (34, 345) der Kapsel in Eingriff zu kommen, die an einem Anlagerand (40, 713) des Kapselhalters anliegt,
wobei dieser Klemm-Abschnitt (60) der Klemm-Mittel und die Anlageränder (40, 713) des Kapselhalters eine Klemmfläche mit der Umrandung (34, 345) der Kapsel bilden, die im Wesentlichen umlaufend und kontinuierlich ist.

2. Vorrichtung nach Anspruch 1,
**dadurch gekennzeichnet,**
**dass** das elastische Abdichtungsmittel (16, 160) die Basis (17) einer Einspritzspitze (13, 130) örtlich begrenzt umgibt.

3. Vorrichtung nach Anspruch 2,
**dadurch gekennzeichnet,**
**dass** das elastische Abdichtungsmittel sich über eine Oberfläche der Einspritzhalterung (4, 200, 450, 480) erstreckt, die dazu vorgesehen ist, die Einspritzfläche (3, 301) der Kapsel vollständig abzudecken.

4. Vorrichtung nach Anspruch 3,
**dadurch gekennzeichnet,**
**dass** das elastische Abdichtungsmittel sich über den Klemm-Abschnitt (60) der Einspritzhalterung (4, 200, 450, 480) erstreckt.

5. Vorrichtung nach den Ansprüchen 2, 3 oder 4,
**dadurch gekennzeichnet,**
**dass** das Abdichtungsmittel aus Elastomer oder Silikon besteht.

6. Vorrichtung nach einem der vorherigen Ansprüche,
**dadurch gekennzeichnet,**
**dass** die Einspritzhalterung (4, 200, 450, 480) einen hervorstehenden Eingriffsabschnitt (15, 150) aufweist, der dazu vorgesehen ist, eine bewegbare Wand (3, 301) der Kapsel ins Innere der Kapsel zu drücken.

7. Vorrichtung nach Anspruch 6,
**dadurch gekennzeichnet,**
**dass** die Eingriffsfläche ihrerseits ein elastisches Mittel ist, das die Dichtigkeit an der Wand der Kapsel hergestellt.

8. Vorrichtung nach einem der vorherigen Ansprüche,
**dadurch gekennzeichnet,**
**dass** die Einspritzmittel (5, 500, 550, 580) in einem Bereich angeordnet sind, der bezogen auf die Mittelachse (O) der Einspritzhalterung exzentrisch liegt.

9. Vorrichtung nach einem der vorherigen Ansprüche,
**dadurch gekennzeichnet,**
**dass** die Einspritzmittel (5, 500, 550, 580) von mindestens einer Einspritzspitze (13,510) gebildet werden.

10. Vorrichtung nach einem der Ansprüche 1 bis 9,
**dadurch gekennzeichnet,**
**dass** die Einspritzmittel (5, 500) auf einer geradlinigen Bahn bewegbar sind.

11. Vorrichtung nach einem der Ansprüche 1 bis 10,
**dadurch gekennzeichnet,**
**dass** die Einspritzmittel (550) auf einer Bahn bewegbar sind, die eine Kombination von mindestens einer Drehbewegungskomponente und einer axialen Komponente ist.

12. Vorrichtung nach einem der vorherigen Ansprüche,
**dadurch gekennzeichnet,**
**dass** die komplementären Einsetzmittel (7, 700, 720, 750) des Kapselhalters (6, 600, 660, 680) und der Einheit zum Einspeisen (2, 200, 250, 280) eines Fluids Führungsrippen (18, 710) und Führungsrillen (19, 720) umfassen, die das gleitende Einführen des Kapselhalters in die Einheit zum Einspeisen eines Fluids ermöglichen.

13. Vorrichtung nach einem der vorherigen Ansprüche,
**dadurch gekennzeichnet,**
**dass** die Klemm-Mittel (22, 270, 275) ein verschiebbares Scharnier (29) oder einen Nocken umfasst, das oder der durch einen Hebel (30, 271, 276) betätigt wird.

14. Vorrichtung nach einem der vorherigen Ansprüche,
**dadurch gekennzeichnet,**
**dass** die komplementären Einsetzmittel (700, 750) Klemm-Mittel bilden, die dazu ausgeführt sind, den Kapselhalter in der eingesetzten Position zu blockieren, und zwar durch die Wirkung des Einspritzens des Fluids unter Druck in die Kapsel.

15. Vorrichtung nach Anspruch 14,
**dadurch gekennzeichnet,**
**dass** die komplementären Einsetzmittel (700) keilförmig ausgebildet sind.

16. Vorrichtung nach Anspruch 15,
**dadurch gekennzeichnet,**
**dass** die komplementären Einsetzmittel (700, 750) Rippen (710) in Verbindung mit Rillen (720) von stufenlos variabler Höhe umfassen.

17. Kombination einer Vorrichtung nach einem der vorherigen Ansprüche und einer Kapsel (10, 100),
**dadurch gekennzeichnet,**
**dass** die Kapsel einen Körper mit einer Umrandung (34) aufweist, auf die eine flexible Membran versiegelnd aufgebracht ist, welche die Einspritzwand bildet.
